# EUROPÄISCHE PATENTANMELDUNG

(11) **EP 1 332 931 A2**
(43) Veröffentlichungstag der Anmeldung: **06.08.2003**
(21) Anmeldenummer: 02019393.4
(22) Anmeldetag: 30.08.2002
(51) Int. Cl.: B60R 21/20

(54) **Verfahren zur Befestigung eines Schwingungstilgers an einer Halterung**

(30) Priorität: 23.01.2002 DE 10202644
(71) Anmelder: Carl Freudenberg KG, 69469 Weinheim (DE)
(72) Erfinder: Lodholz, Roland, 79285 Ebringen (DE); Dietl, Alfred, 79418 Schliengen (DE)

(57) **Zusammenfassung**

Verfahren zur Befestigung der elastischen Federelemente eines Schwingungstilgers an einer metallenen Halterung, insbesondere eines in einem Lenkrad des Kraftfahrzeugs unterzubringenden Schwingungstilgers an einem Halteblech oder Lenkradboden, wobei die Federelemente die Form von zylindrischen Zapfen haben, die jeweils mit einer eine Ringnut aufweisenden Wulst versehen in entsprechend ausgestaltete Öffnungen im Halteblech einrasten, wodurch der Schwingungstilger (1) und das Halteblech (8) übereinander liegend in eine Vorrichtung eingelegt werden, so dass die Zapfen (4) des Schwingungstilgers (1) fluchtend zu den Öffnungen (9) im Halteblech (8) ausgerichtet sind,
- dass an den Zapfen (4) vorhandene Ansätze (7) durch die Öffnungen (9) hindurchgeführt werden bis das Halteblech (8) an der Wulst (5) anstößt,
- dass die Ansätze (7) von Greifern (10) erfasst und die Zapfen (4) weiter durch die Öffnungen (9) gezogen werden bis die Ränder der Öffnungen (9) in die Ringnuten (6) einrasten und
- dass die Ansätze (7) durch Schneidmesser (11) abgetrennt werden.

## Beschreibung

### Technisches Gebiet

Die Erfindung betrifft ein Verfahren zur Befestigung der elastischen Federelemente eines Schwingungstilgers an einer metallenen Halterung, insbesondere eines in einem Lenkkrad eines Kraftfahrzeugs unterzubringenden Schwingungstilgers an einem Halteblech beziehungsweise direkt im Lenkradboden, wobei die Federelemente die Form von zylindrischen Zapfen haben, die jeweils mit einer eine Ringnut aufweisende Wulst versehen in entsprechend ausgestaltete Öffnungen im Halteblech oder Lenkradboden einrasten.

Die Befestigung von Schwingungstilgern wird über elastische Federelemente durchgeführt, die auf sehr unterschiedliche Weise an der Schwingmasse und an dem zu dämpfenden Maschinenteil verbunden sind. Die Verbindung ist so zu gestalten, dass die Schwingmasse auch bei größeren Schwingungen nicht vom Maschinenteil abreißt. Gleichzeitig soll sie möglichst einfach im konstruktiven Aufbau sein und nur wenig Material benötigen.

### Stand der Technik

Durch die DE 39 25 761 A1 ist ein Schwingungstilger für Kraftfahrzeuglenkräder bekannt geworden, bei dem entweder die gesamte Luftsackeinheit oder auch nur der Gasgenerator für das Aufblähen des Luftsacks als Schwingungstilger verwendet werden. Die elastische Befestigung der Luftsackeinheit beziehungsweise des Gasgenerators an einem Träger wird durch elastische Mittel durchgeführt die aus einem rohförmigen Teil bestehen und durch dessen Inneres eine Niet oder auch eine Schraube durchgeführt ist, welche die Schwingungsträgermasse mit dem Träger verbindet. Eine solche Verbindung von Schwingmasse und Träger ist schwer herzustellen und bringt erhebliche Probleme bei der Montage der Schwingmasse am Träger.

Eine einfachere Ausgestaltung der Federelemente zwischen der Schwingmasse und dem Halteblech ist in der älteren DE 101 42 210.5 enthalten. Dort sind die Federelemente in der Form von einrastbaren Zapfen ausgebildet, die in entsprechend ausgestaltete Ausnehmungen im Befestigungsblech unter elastischer Vorspannung eingezogen sind. Das Einführen der Zapfen in die blechvorhandenen Ausnehmungen stellt ein fertigungstechnisches Problem dar.

### Darstellung der Erfindung

Der Erfindung liegt die Aufgabe zu Grunde ein Verfahren anzubieten, dass eine einfache Montage der elastischen Federelemente in den Öffnungen der metallenen Halterung ermöglicht.

Die Lösung der gestellten Aufgabe erfolgt bei einem Verfahren der Eingangs genannten Gattung erfindungsgemäß dadurch, dass der Schwingungstilger und das Halteblech übereinander liegend in einer Vorrichtung eingelegt werden, so dass die Zapfen des Schwingungstilgers fluchtend zu den Öffnungen in dem Halteblech ausgerichtet sind, dass an den Zapfen vorhandene Ansätze durch die Öffnungen hindurchgeführt werden bis das Halteblech an der Wulst der Zapfen anstößt, dass sodann die Ansätze von Greifern erfasst und die Zapfen weiter durch die Öffnungen gezogen werden bis die Ränder der Öffnungen in die Ringnuten der Zapfen einrasten und dass die Ansätze durch Schneidmesser abgetrennt werden. Mit diesem Verfahren kann die Schwingmasse auf mechanischer Weise mit dem Halteblech verbunden werden, dadurch können hohe Stückzahlen produziert werden bei gleichbleibender Qualität.

### Kurzbeschreibung der Zeichnung

In der Zeichnung sind schematisch die einzelnen Verfahrensschritte dargestellt und zwar anhand von nur einem mit der Schwingmasse verbundenen Zapfen.

### Ausführung der Erfindung

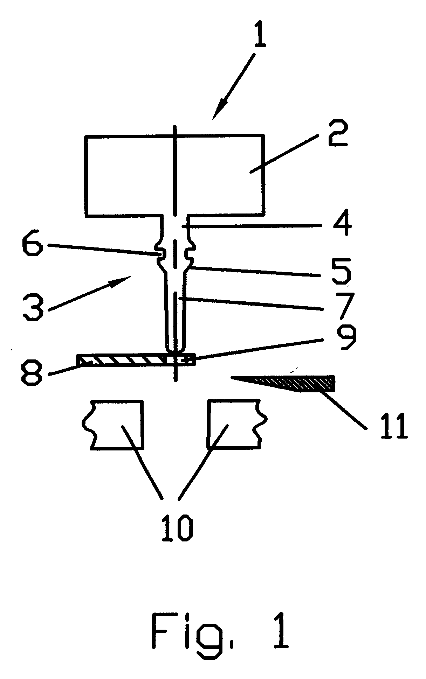

Die Figur 1 zeigt einen Schwingungstilger 1 aus einer Schwingmasse 2 und einem daran anvulkanisierten Federelement 3 aus einem elastischen Material. Das Federelement 3 besteht aus dem Zapfen 4 mit der Wulst 5. Das Federelement 3 ist mit der Schwingmasse 2 durch Vulkanisation verbunden. Die Wulst 5 hat etwa in ihrer Mitte eine Ringnut 6. Am Zapfen 4 ist außerdem der Ansatz 7 angebracht, dieses geschieht während der Vulkanisation von Schwingmasse 2 und Federelement 3. Unterhalb des Schwingungstilgers 1 befindet sich das Halteblech 8, welches mit der Öffnung 9 versehen ist. Die Öffnung 9 und der Zapfen 4 mit dem Ansatz 7 sind fluchtend zueinander ausgerichtet. Das Halteblech 8 liegt auf einem Vorrichtungsteil auf, welches nicht näher gezeigt ist und die Greifer 10 hat. Außerdem ist die Vorrichtung noch mit dem Schneidmesser 11 ausgestattet. Es wird nochmals darauf hingewiesen, dass dieses Ausführungsbeispiel nur die schematische Wiedergabe des Verfahrens ist. In der praktischen Ausführung würde die Schwingmasse mit einer größeren Anzahl von Zapfen ausgestattet und das Halteblech entsprechend mit der gleichen Anzahl von Öffnungen 9. Ebenso hat die Vorrichtung für jeden Zapfen Greifer 10 und ein Messer 11.

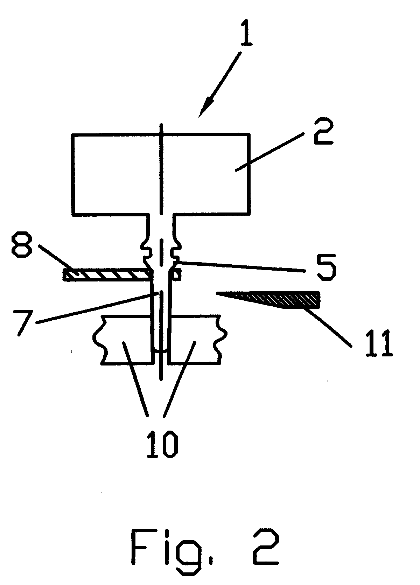

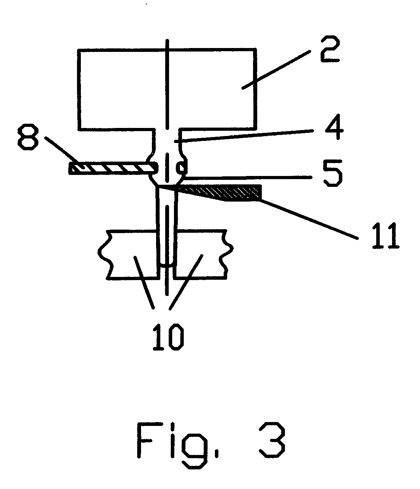

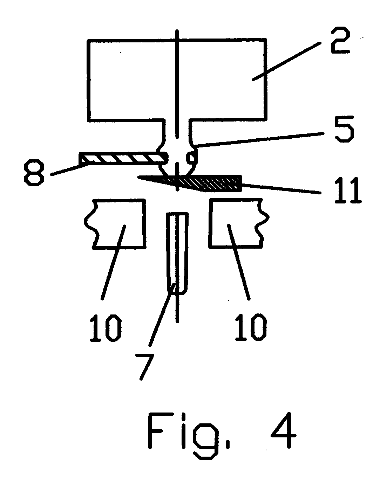

In der Figur 2 ist der Ansatz 7 durch die Öffnung 9 hindurchgesteckt bis die Wulst am Rand der Öffnung 9 zur Anlage kommt. Der Ansatz 7 wird so dann von dem Greifer 10 erfasst und wie in der Figur 3 gezeigt, solange nach unten gezogen bis das Halteblech 8 in die Ringnut 6 der Wulst 5 einrastet. Danach fährt das Schneidmesser 11 vor und trennt den Ansatz 7 vom Zapfen 4 ab.

Nach dem Abtrennen des Ansatzes 7 vom Zapfen 4 unterhalb der Wulst 5 werden die Greifer 10 geöffnet und der abgeschnittene Ansatz 7 fällt nach unten weg.

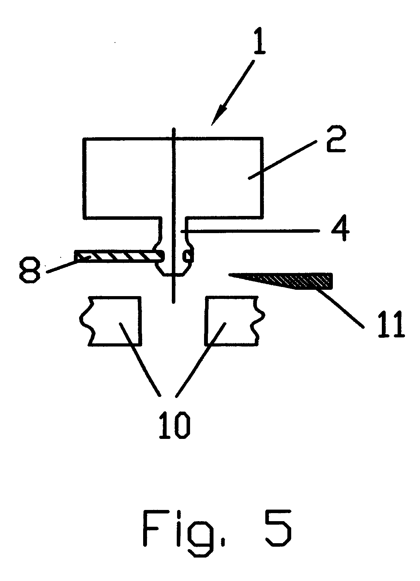

Die Figur 5 zeigt das dann folgende wegfahren des Messers 11 in seine Ausgangsposition. Der Befestigungsvorgang zwischen der Schwingmasse 2 und dem Halteblech 8 über den elastischen Zapfen 4 ist damit beendet und der Schwingungstilger 1 kann über das Halteblech 8 in geeigneter Weise im Lenkrad befestigt werden.

## Patentansprüche

1. Verfahren zur Befestigung der elastischen Federelemente eines Schwingungstilgers an einer metallenen Halterung, insbesondere eines in einem Lenkrad des Kraftfahrzeugs unterzubringenden Schwingungstilgers an einem Halteblech oder Lenkradboden, wobei die Federelemente die Form von zylindrischen Zapfen haben, die jeweils mit einer eine Ringnut aufweisenden Wulst versehen in entsprechend ausgestaltete Öffnungen im Halteblech einrasten, **dadurch gekennzeichnet,**
- **dass** der Schwingungstilger (1) und das Halteblech (8) übereinander liegend in eine Vorrichtung eingelegt werden, so dass die Zapfen (4) des Schwingungstilgers (1) fluchtend zu den Öffnungen (9) im Halteblech (8) ausgerichtet sind,
- **dass** an den Zapfen (4) vorhandene Ansätze (7) durch die Öffnungen (9) hindurchgeführt werden bis das Halteblech (8) an der Wulst (5) anstößt,
- **dass** die Ansätze (7) von Greifern (10) erfasst und die Zapfen (4) weiter durch die Öffnungen (9) gezogen werden bis die Ränder der Öffnungen (9) in die Ringnuten (6) einrasten und
- **dass** die Ansätze (7) durch Schneidmesser (11) abgetrennt werden.
